# EUROPÄISCHE PATENTSCHRIFT

(11) **EP 3 945 731 B1**
(45) Veröffentlichungstag und Bekanntmachung des Hinweises auf die Patenterteilung: **04.06.2025**
(21) Anmeldenummer: 20188238.8
(22) Anmeldetag: 28.07.2020
(51) Int. Cl.: H04R 25/00, H04B 5/20, H04B 5/79, H04W 12/50, H04W 4/80, H04W 8/00, H02J 7/00

(54) **VERFAHREN ZUM AUFBAU EINER KURZSTRECKENFUNKVERBINDUNG SOWIE LADEGERÄT**
METHOD FOR ESTABLISHING A SHORT-RANGE RADIO LINK AND CHARGER
PROCÉDÉ D'ÉTABLISSEMENT D'UNE CONNEXION RADIO À COURTE DISTANCE AINSI QU'APPAREIL DE CHARGE

(43) Veröffentlichungstag der Anmeldung: 02.02.2022
(73) Patentinhaber: Sivantos Pte. Ltd., Singapore 539775 (SG)
(72) Erfinder: MENZL, Stefan, 91217 Hersbruck (DE); FISCHER, Thomas, 91056 Erlangen (DE); MIJOVIC, Stefan, 91056 Erlangen (DE); CAVALLARI, Riccardo, 91052 Erlangen (DE); GÖKAY, Umut, 55116 Mainz (DE)
(74) Vertreter: FDST Patentanwälte

(56) Entgegenhaltungen:
- WO-A1-2008/125107
- WO-A1-2013/104153
- WO-A1-2015/007056
- CN-B- 106 028 264
- US-A1- 2008 057 868
- US-A1- 2013 029 596
- US-A1- 2013 257 364
- US-A1- 2013 316 649

## Beschreibung

Die Erfindung betrifft ein Verfahren zum Aufbau einer Kurzstreckenfunkverbindung, insbesondere einer Bluetooth-Verbindung, zwischen einem ersten Gerät und einem zweiten Gerät sowie weiterhin ein Hörgerät und ein Ladegerät.

Eine Kurzstreckenfunkverbindung ist eine Verbindung per Funk z.B. bei einer Übertragungsfrequenz von wenigen GHz über eine kurze Strecke von z.B. höchsten mehreren 10 m zwischen zwei Geräten und dient zur Datenübertragung, d.h. zum Austausch von Daten zwischen diesen beiden Geräten. Ein Beispiel für eine Kurzstreckenfunkverbindung ist eine Bluetooth-Verbindung. Eine Kurzstreckenfunkverbindung wird zwischen zwei Geräten aufgebaut, indem diese im Vorfeld der tatsächlichen Verbindung, d.h. beim Aufbau der Verbindung, Kopplungsdaten austauschen, zur Kopplung der beiden Geräte und somit letztendlich zur Herstellung der Kurzstreckenfunkverbindung. Die Bluetooth-Technologie im Allgemeinen sowie der Aufbau einer Bluetooth-Verbindung im Speziellen sind beschrieben in der BLUETOOTH CORE SPECIFICATION Version 5.1, welche beispielsweise unter www.bluetooth.com abrufbar ist.

Ein Hörgerät dient regelmäßig zur Versorgung eines hörgeschädigten Nutzers. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Modifikation erfolgt insbesondere anhand eines individuellen Audiogramms des Nutzers, welcher dem Hörgerät zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird.

Ein Ladegerät dient allgemein zum Laden eines anderen Geräts, indem dieses Gerät an das Ladegerät angeschlossen wird. Sobald das Gerät an das Ladegerät angeschlossen ist und ein Laden erfolgen sind, erfolgt eine Übertragung elektrischer Leistung vom Ladegerät an das Gerät. Beispielsweise ist es denkbar, dass ein Energiespeicher eines Hörgeräts ladbar ist und geladen wird, indem das Hörgerät an ein geeignetes Ladegerät angeschlossen wird.

Regelmäßig besteht ein Bedürfnis eines Nutzers zwei Geräte zum Datenaustausch zu verbinden, speziell mittels einer Kurzstreckenfunkverbindung, da eine solche eine hohe Mobilität und Flexibilität gewährleistet, bei gleichzeitiger Sicherheit aufgrund der beschränkten Reichweite. Denkbar ist beispielsweise eine Kopplung eines Hörgeräts mit einem Smartphone, um mittels des Smartphones das Hörgerät zu steuern oder einzustellen oder um umgekehrt Daten vom Hörgerät an das Smartphone zu senden und dort z.B. zu verarbeiten.

Die Kopplung zweier Geräte mittels einer Kurzstreckenfunkverbindung bereitet manchen Nutzern, speziell technisch wenig versierten Nutzern, möglicherweise Probleme und erfordert zudem unter Umständen einen gewissen Zeitaufwand, weshalb ein möglichst automatischer Aufbau angestrebt wird oder zumindest ein für einen Nutzer möglichst einfach zu handhabender Aufbau. Dies ist umso bedeutsamer, wenn die Kurzstreckenverbindung regelmäßig erneut aufgebaut werden soll oder verschiedene Geräte in unterschiedlicher Konstellation miteinander verbunden werden sollen.

In der US 2017/0013342 A1 ist ein Verfahren zur Drahtlospaarung eines Audioausgabegeräts mit einem Partnergerät beschrieben. Dabei wird das Öffnen einer Abdeckung eines Gehäuses, welches das Audioausgabegerät enthält, erkannt.

In der WO 2007/097892 A2 wird ein Verfahren zur Kommunikation mit einem Hörgerät beschrieben. Dabei wird eine hörbare Trägerfrequenz übertragen und mit Daten moduliert und im Hörgerät mit einem Filter detektiert.

Weitere Hörgeräte sind beschrieben in US 2013/0316649 A1 und WO 2008/125107 A1.

In der US 2013/0257364 A1 ist schließlich ein Verfahren zur drahtlosen Kommunikation beschrieben.

Vor diesem Hintergrund ist es eine Aufgabe der Erfindung, den Aufbau einer Kurzstreckenfunkverbindung zwischen zwei Geräten zu verbessern und dabei möglichst zu vereinfachen. Hierzu soll ein verbessertes Verfahren zum Aufbau einer Kurzstreckenfunkverbindung angegeben werden. Außerdem sollen speziell ein verbessertes Hörgerät und ein verbessertes Ladegerät angegeben werden, welche bei dem Verfahren verwendet werden.

Die Aufgabe wird erfindungsgemäß gelöst durch ein Verfahren mit den Merkmalen gemäß Anspruch 1, durch ein Verfahren mit den Merkmalen gemäß Anspruch 2 sowie durch ein Ladegerät mit den Merkmalen gemäß Anspruch 12. Vorteilhafte Ausgestaltungen, Weiterbildungen und Varianten sind Gegenstand der Unteransprüche. Dabei gelten die Ausführungen im Zusammenhang mit dem Verfahren sinngemäß jeweils auch für das Hörgerät und das Ladegerät sowie umgekehrt. Sofern nachfolgend Verfahrensschritte des Verfahrens beschrieben sind, ergeben sich vorteilhafte Ausgestaltungen für das Hörgerät und das Ladegerät jeweils insbesondere dadurch, dass dieses ausgebildet ist, einen oder mehrere dieser Verfahrensschritte auszuführen.

Das Verfahren dient zum Aufbau einer Kurzstreckenfunkverbindung, insbesondere einer Bluetooth-Verbindung, zwischen einem ersten Gerät und einem zweiten Gerät. Die beiden Geräte weisen entsprechend jeweils eine Schnittstelle für die Kurzstreckenfunkverbindung auf, z.B. eine Antenne, insbesondere Bluetooth-Antenne.

Der Aufbau der Kurzstreckenfunkverbindung wird auch als Paarung oder Kopplung (sogenanntes "pairing") bezeichnet. Im Falle einer Bluetooth-Verbindung ist diese vorzugsweise eine Niedrigenergie-Bluetooth-Verbindung, auch als BLE (d.h. "bluetooth low energy") bezeichnet. Die Kurzstreckenfunkverbindung zeichnet sich insbesondere dadurch aus, dass diese eine beschränkte Reichweite von höchstens wenigen 10 m aufweist sowie eine Übertragungsfrequenz im Bereich weniger GHz.

Bei dem Verfahren vermittelt ein Ladegerät, welches zum Laden eines Hörgeräts ausgebildet ist, den Aufbau der Kurzstreckenfunkverbindung zwischen den beiden Geräten, indem das Ladegerät Kopplungsdaten des ersten Geräts zum Aufbau der Kurzstreckenfunkverbindung an das zweite Gerät übermittelt, sodass dieses mit dem ersten Gerät gekoppelt wird und die Kurzstreckenfunkverbindung aufgebaut wird. Die Kopplungsdaten sind insbesondere Authentifizierungsdaten, Identifikationsdaten, Verschlüsselungsdaten, z.B. ein sogenannter Passkey, oder eine Kombination hiervon. Allgemein dienen die Kopplungsdaten zur Kopplung der beiden Geräte und werden im Vorfeld der tatsächlichen Kopplung benötigt, um die Kurzstreckenfunkverbindung erfolgreich aufzubauen. Die genaue Beschaffenheit der Kopplungsdaten ist aber an sich nicht weiter von Bedeutung.

Ein Kerngedanke der Erfindung ist insbesondere die Verwendung eines Ladegeräts eines Hörgerät zur Vermittlung des Aufbaus einer Kurzstreckenfunkverbindung zwischen zwei Geräten, welche dann nicht direkt die nötigen Kopplungsdaten miteinander austauschen müssen, vielmehr werden die Kopplungsdaten von dem Ladegerät bereitgestellt und je nach Bedarf an ein jeweiliges Gerät übermittelt, um dieses mit einem anderen Gerät zu verbinden. Das Ladegerät wird daher auch als Master-Gerät bezeichnet. Das Ladegerät selbst tauscht abseits der Kopplungsdaten insbesondere keine weiteren Daten mit den beiden Geräten aus, dies geschieht nach dem Aufbau der Kurzstreckenfunkverbindung direkt zwischen den beiden Geräten. Das Ladegerät ist demnach insbesondere gerade kein Relais der Kurzstreckenfunkverbindung, sondern vielmehr ein Vermittler beim Aufbau der Kurzstreckenfunkverbindung. Die Vermittlung durch das Ladegerät erleichtert die Kopplung der beiden Geräte mittels der Kurzstreckenfunkverbindung, da diese die Kopplungsdaten nun nicht selbst bereitstellen müssen. Dies ist besonders vorteilhaft bei solchen Ausgestaltungen, bei welchen die Kopplungsdaten nicht auf dieselbe Weise wie die Daten übertragen werden, sondern auf andere Weise, welche möglicherweise eine Schnittstelle erfordert, welche zur Nutzung mit einem der Geräte ungeeignet ist. Beispielsweise sind NFC-Antennen aufgrund der niedrigeren Übertragungsfrequenz typischerweise größer als Bluetooth-Antennen, d.h. benötigen mehr Bauraum, und ungeeignet zur Verwendung in einem Hörgerät, wohingegen eine Bluetooth-Antenne üblicherweise problemlos in ein Hörgerät integrierbar ist. Weiterhin lassen sich mittels des Ladegeräts auf einfache Weise diverse Geräte automatisch und zentralisiert miteinander koppeln, ohne dass der Nutzer dies für jede einzelne Kurzstreckenfunkverbindung manuell vornehmen muss.

Als erstes und zweites Gerät kommen verschiedenste Geräte infrage.

Besonders bevorzugt ist eine Ausgestaltung, bei welcher das erste Gerät das Hörgerät ist, welches mit dem Ladegerät ladbar ist, sodass das Ladegerät dann den Aufbau einer Kurzstreckenfunkverbindung zwischen dem zugeordneten Hörgerät und einem beliebigen anderen Gerät vermittelt.

Bevorzugterweise ist das zweite Gerät ein mobiles Endgerät, insbesondere ein Smartphone. Alternativ ist das zweite Gerät ein TV-Gerät oder ein beliebiges anderes Gerät, insbesondere eine Audioquelle für das Hörgerät, d.h. das zweite Gerät stellt ein Audiosignal bereit, welches über die Kurzstreckenfunkverbindung an das Hörgerät übertragen und von diesem in Schall umgewandelt und ausgegeben werden soll und zweckmäßigerweise auch wird.

Grundsätzlich sind jegliche Kombinationen von zwei Geräten denkbar und geeignet. Bei einem Hörgerät, einem Smartphone und einem TV-Gerät vermittelt das Ladegerät dann zwischen zwei beliebigen dieser Geräte, wobei jedoch eine Vermittlung zwischen einem Hörgerät und einem anderen Gerät besonders vorteilhaft ist, da ein Hörgerät im Gegensatz zu einem mobilen Endgerät und einem TV-Gerät typischerweise deutlich stärkeren Beschränkungen hinsichtlich Bauraum und Energieverbrauch unterliegt und daher besonders von einer Vermittlung durch das zugehörige Ladegerät profitiert.

Wie bereits oben angedeutet, ist das Verfahren besonders vorteilhaft, wenn die Kopplungsdaten auf anderem Wege übertragen werden sollen oder sogar müssen als die Daten, welche nach dem Aufbau der Kurzstreckenfunkverbindung über diese übertragen werden. In einer bevorzugten Ausgestaltung werden entsprechend die Kopplungsdaten vom Ladegerät an das zweite Gerät OOB (Abkürzung für "out of band"), d.h. außerhalb eines Übertragungsfrequenzbereichs der Kurzstreckenfunkverbindung, übermittelt. Die Kurzstreckenfunkverbindung weist einen Übertragungsfrequenzbereich auf, welcher bei der Übertragung von Daten genutzt wird. Unter OOB wird nun jeglicher Frequenzbereich verstanden, welcher gerade nicht mit diesem Übertragungsfrequenzbereich überlappt oder darin liegt. Dem liegt die Überlegung zugrunde, dass eine andere Art der Verbindung zur Übertragung möglicherweise vorteilhafter ist als die Kurzstreckenfunkverbindung selbst.

Um die Kopplungsdaten vom Ladegerät an das zweite Gerät OOB zu übermitteln, wird besonders eine NFC-Verbindung bevorzugt, d.h. die Kopplungsdaten werden OOB mittels NFC (Abkürzung für "near field communication") übermittelt. NFC wird auch als Nahfeldkommunikation bezeichnet und ist grundsätzlich eine Alternative zu Bluetooth, weist jedoch regelmäßig eine niedrigere Übertragungsfrequenz auf und typischerweise auch eine geringere Reichweite. Beispielsweise liegt eine Übertragungsfrequenz der NFC-Verbindung unterhalb von 1 GHz und insbesondere im Bereich von 1 MHz bis 100 MHz. Die NFC-Verbindung weist beispielsweise eine Reichweite von höchstens 1 cm auf.

Vorzugsweise weist das Ladegerät eine NFC-Marke auf, in welcher die Kopplungsdaten des ersten Geräts hinterlegt sind und diese Kopplungsdaten werden OOB mittels NFC an das zweite Gerät übermittelt. Die NFC-Marke ist demnach insbesondere ein Speicher für die Kopplungsdaten. Die Kopplungsdaten sind beispielsweise bereits bei der Herstellung des Ladegeräts auf der NFC-Marke hinterlegt worden oder im Rahmen einer Anpassungssitzung für das Hörgerät und entsprechend auch für das zugehörige Ladegerät. Alternativ oder zusätzlich werden die Kopplungsdaten bei Bedarf von dem Ladegerät bei dem ersten oder zweiten Gerät oder bei einem anderen Gerät abgefragt und in der NFC-Marke hinterlegt.

Ein Vorteil der Übermittlung der Kopplungsdaten OOB bezüglich der Kurzstreckenfunkverbindung ist insbesondere, dass das Ladegerät selbst lediglich für eine Übermittlung von Daten mittels OOB ausgebildet sein muss und nicht für eine Übermittlung mittels der Kurzstreckenfunkverbindung ausgebildet zu sein braucht. Beispielsweise ist das Ladegerät lediglich zum Aufbau einer NFC-Verbindung ausgebildet, nicht jedoch zum Aufbau einer Bluetooth-Verbindung, wobei letztere zusätzlich zur Möglichkeit einer NFC-Verbindung aber auch vorteilhaft ist.

In einer bevorzugten Ausgestaltung erkennt das Ladegerät eine Annäherung des zweiten Geräts an das Ladegerät, insbesondere mittels NFC, und übermittelt daraufhin, z.B. nach Aufbau einer NFC-Verbindung mit dem zweiten Gerät, die Kopplungsdaten an das zweite Gerät. Die Annäherung des zweiten Geräts an das Ladegerät dient hier als zuverlässiger Indikator dafür, dass eine Kopplung des zweiten Geräts mit dem ersten Gerät von einem Nutzer gewünscht ist. Zur besonders sicheren Erkennung einer Annäherung ist eine NFC-Verbindung besonders geeignet, da hierbei aufgrund der lediglich geringen Reichweite der NFC-Antennen eine versehentliche Annäherung sehr unwahrscheinlich ist. Das Ladegerät und das zweite Gerät weisen dann jeweils zweckmäßigerweise eine NFC-Antenne auf, zur Herstellung einer NFC-Verbindung und zum OOB-Austausch der Kopplungsdaten. Die beschriebene Erkennung einer Annäherung des zweiten Geräts an das Ladegerät, besonders bevorzugt der Aufbau einer NFC-Verbindung zwischen dem Ladegerät und dem zweiten Gerät, dient somit vorteilhaft zur Initiierung des Aufbaus der Kurzstreckenfunkverbindung, d.h. sozusagen als Schalter, um die Kopplung der beiden Geräte zu veranlassen und durchzuführen. Auf diese Weise wird die notwendige Nähe für die NFC-Verbindung als zuverlässiger Trigger genutzt, ohne dass das erste Gerät selbst mit einer NFC-Antenne ausgerüstet sein muss und entsprechend vorzugsweise frei ist von einer NFC-Antenne. Dies ist speziell bei einem Hörgerät als erstem Gerät vorteilhaft, da eine NFC-Antenne nicht ohne weiteres in ein Hörgerät integrierbar ist. In das Ladegerät ist jedoch eine NFC-Antenne typischerweise problemlos integrierbar und daher weist das Ladegerät vorliegend auch vorzugsweise eine NFC-Antenne und allgemein eine OOB-Antenne auf.

Das erste Gerät ist zum Laden an das Ladegerät anschließbar. Dabei wird unter "angeschlossen" verstanden, dass ein Energieaustausch zwischen dem ersten Gerät und dem Ladegerät zum Laden eines Energiespeichers des ersten Geräts ermöglicht ist. Entsprechend erfolgt das Laden kontaktlos, z.B. induktiv mittels eines Spulenpaars, oder mittels Ladekontakten an dem Ladegerät und dem ersten Gerät. In jedem Fall ist es zum Anschließen typischerweise nötig, das Ladegerät und das erste Gerät in eine bestimmte räumliche Beziehung zueinander zu bringen, beispielsweise das erste Gerät an das Ladegerät anzustecken oder in dieses einzustecken oder einzulegen oder auf dieses aufzulegen oder dergleichen.

In einer ersten Ausgestaltung übermittelt das Ladegerät die Kopplungsdaten an das zweite Gerät, wenn das erste Gerät an das Ladegerät angeschlossen ist, insbesondere zum Laden. Demnach erfolgt auch der Aufbau der Kurzstreckenfunkverbindung, während das erste Gerät an das Ladegerät angeschlossen ist. Eine Trennung des ersten Geräts vom Ladegerät zum Aufbau der Kurzstreckenfunkverbindung ist dann vorteilhaft nicht notwendig und verbessert die Handhabung der diversen Geräte. Das Ladegerät übermittelt die Kopplungsdaten an das zweite Gerät erst dann, wenn zusätzlich ein Schalter des Ladegeräts betätigt wird. Um die tatsächliche Kopplung der Geräte steuerbar zu gestalten, wird also zusätzlich die Betätigung des Schalters zur Initiierung der Kopplung gefordert. Auf diese Weise kann der Nutzer gezielt mittels eines einfachen Schalters kontrollieren, wann eine Kopplung des ersten und des zweiten Geräts erfolgt. Dies ist insbesondere zusätzlich zur oben beschriebenen Nutzung einer NFC-Verbindung als sozusagen virtueller Schalter möglich und vorteilhaft. Die vorigen Ausführungen gelten diesbezüglich analog. In der ersten Ausgestaltung weist das Ladegerät eine Schale auf und das erste Gerät ist durch Einlegen in die Schale an das Ladegerät anschließbar. Der Schalter ist dabei in der Schale angeordnet und durch Niederdrücken des ersten Geräts in der Schale betätigbar.

Alternativ weist das Ladegerät in einer zweiten Ausgestaltung eine Schale und einen Deckel auf und das erste Gerät ist durch Einlegen in die Schale an das Ladegerät anschließbar und der Deckel ist zum Entnehmen des ersten Geräts aus der Schale aufklappbar. Wenn das erste Gerät an das Ladegerät angeschlossen ist, übermittelt das Ladegerät beim Aufklappen des Deckels die Kopplungsdaten an das zweite Gerät. Der Deckel betätigt hierzu beispielsweise einen Schalter wie oben beschrieben. Auf diese Weise ist eine automatische Kopplung, d.h. ein automatischer Aufbau der Kurzstreckenfunkverbindung beim Öffnen des Ladegeräts kurz vor einer Entnahme des ersten Geräts aus dem Ladegerät realisiert. Beim Aufklappen des Deckels, d.h. beim Öffnen des Ladegeräts, ist mit hinreichender Wahrscheinlichkeit anzunehmen, dass das erste Gerät nachfolgend auch entnommen wird und dadurch vom Ladegerät getrennt wird, insbesondere mit der Absicht, das erste Gerät auch zu nutzen, bei einem Hörgerät z.B. dieses in oder an einem Ohr anzulegen und zum bestimmungsgemäß Gebrauch zu tragen. Daher wird vorteilhaft speziell in dieser Situation die Kurzstreckenfunkverbindung automatisch aufgebaut, sodass der Nutzer dies nicht manuell erledigen muss.

Zusätzlich ist auch dann eine Kopplung vorteilhaft, wenn das erste Gerät gerade nicht an das Ladegerät angeschlossen ist, sondern vielmehr von diesem getrennt ist und beispielsweise wie zuvor beschrieben bestimmungsgemäß gebraucht wird. Daher werden in einer geeigneten Ausgestaltung, wenn das erste Gerät nicht an das Ladegerät angeschlossen ist, die Kopplungsdaten an das zweite Gerät übermittelt, sobald das Ladegerät eine Annäherung des zweiten Geräts an das Ladegerät erkennt. Die Erkennung der Annäherung erfolgt insbesondere wie oben bereits beschrieben, z.B. mittels NFC oder mittels eines Entfernungssensor.

In einer zweckmäßigen Ausgestaltung erhält das Ladegerät die Kopplungsdaten des ersten Geräts von diesem über eine weitere Kurzstreckenfunkverbindung, insbesondere eine weitere Bluetooth-Verbindung, zwischen dem Ladegerät und dem ersten Gerät. Dies ermöglicht vorteilhaft eine Aktualisierung oder Änderung der Kopplungsdaten, z.B. falls das erste Gerät gegen ein anderes erstes Gerät ausgetauscht wird. Die auf diese Weise erhaltenen Kopplungsdaten werden zweckmäßigerweise in der oben bereits genannten NFC-Marke hinterlegt, sofern eine solche vorhanden ist. Unter "weitere Kurzstreckenfunkverbindung" wird eine weitere Kurzstreckenfunkverbindung zusätzlich zur Kurzstreckenfunkverbindung zwischen dem ersten und dem zweiten Gerät verstanden, nicht gemeint ist dagegen, dass zwischen dem ersten Gerät und dem Ladegerät zwei Kurzstreckenfunkverbindungen ausgebildet wären.

In einer vorteilhaften Ausgestaltung erkennt das Ladegerät ein Anschließen des ersten Geräts mittels einer Annäherungserkennung, z.B. im Rahmen eines sogenannten "proximity pairing" mittels RSSI (Abkürzung für "received signal strength indication"), und daraufhin wird eine Kurzstreckenfunkverbindung zwischen dem Ladegerät und dem ersten Gerät aufgebaut, zum automatischen Übermitteln der Kopplungsdaten an das Ladegerät. Mit anderen Worten: das Ladegerät erkennt, dass das erste Gerät sich in der Nähe des Ladegeräts befindet und ruft dann von diesem automatisch die Kopplungsdaten über eine Kurzstreckenfunkverbindung, insbesondere eine Bluetooth-Verbindung, ab, um die Kopplungsdaten dann bei Bedarf weiter an ein zweites Gerät zu übermitteln, falls zwischen dem ersten und dem zweiten Gerät eine Kurzstreckenfunkverbindung aufgebaut werden soll.

Sobald die Kopplungsdaten von dem Ladegerät an das zweite Gerät übertragen worden sind, wird das Ladegerät zum Aufbau einer weiteren Verbindung zwischen dem ersten Gerät und einem weiteren, dritten Gerät an sich nicht mehr zwingend benötigt, denn nun kann analog auch das zweite Gerät vorteilhaft den Aufbau einer weiteren Kurzstreckenfunkverbindung zwischen dem ersten Gerät und dem dritten Gerät vermitteln. Daher übermittelt das zweite Gerät in einer geeigneten Ausgestaltung zum Aufbau einer weiteren Kurzstreckenfunkverbindung zwischen dem ersten Gerät und einem dritten Gerät die Kopplungsdaten direkt an das dritte Gerät.

Ohne Beschränkung der Allgemeinheit der vorigen Ausführungen ist eine spezielle Kombination mehrere der zuvor genannten Konzepte ganz besonders bevorzugt, nämlich eine Ausgestaltung, bei welcher das erste Gerät ein Hörgerät ist, welches mittels des Ladegeräts ladbar ist und welches durch Vermittlung des Ladegeräts mit einem zweiten Gerät über eine Bluetooth-Verbindung gekoppelt wird, und zwar während das Hörgerät an das Ladegerät angeschlossen ist und indem die Kopplungsdaten zum Aufbau der Bluetooth-Verbindung vom Ladegerät an das zweite Gerät OOB übermittelt werden, vorzugsweise über eine NFC-Verbindung. Dabei erfolgen die Übermittlung der Kopplungsdaten und der Aufbau der Bluetooth-Verbindung automatisch, sobald Verbindung für eine OOB-Übermittlung, insbesondere die NFC-Verbindung, aufgebaut ist. Nachfolgend wird ohne Beschränkung der Allgemeinheit davon ausgegangen, dass die Verbindung zur OOB-Übermittlung eine NFC-Verbindung ist. Die NFC-Verbindung selbst wird automatisch aufgebaut, sobald das zweite Gerät hinreichend nah an das Ladegerät angenähert ist, d.h. insbesondere sich innerhalb einer Reichweite einer NFC-Antenne des Ladegeräts für die NFC-Verbindung befindet. Abseits dieser speziellen Ausgestaltung, sind aber auch andere Kombinationen der genannten Konzepte und somit andere Ausgestaltungen grundsätzlich vorteilhaft.

Ein erfindungsgemäßes Hörgerät ist ausgebildet, als erstes Gerät gemäß einem Verfahren wie vorstehend beschrieben mit einem zweiten Gerät verbunden zu werden. Hierzu weist das Hörgerät insbesondere eine Antenne auf, welche für die Kurzstreckenfunkverbindung geeignet ist, z.B. eine Bluetooth-Antenne.

Das Hörgerät dient vorzugsweise zur Versorgung eines hörgeschädigten Nutzers. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Signalverarbeitung ist vorzugsweise ein Teil der Steuereinheit. Die Modifikation erfolgt insbesondere anhand eines individuellen Audiogramms des Nutzers, welcher dem Hörgerät zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird.

Alternativ ist das Hörgerät lediglich zur Ausgabe von Schall aus einer Audioquelle ausgebildet und weist entsprechend einen Hörer auf, zur Schallausgabe, und einen Eingang, zum Empfang eines elektrischen Audiosignals aus der Audioquelle. In einer geeigneten Ausgestaltung ist das Hörgerät ein Kopfhörer.

Vorzugsweise ist das Hörgerät ein binaurales Hörgerät, mit zwei Einzelgeräten, welche beim bestimmungsgemäßen Gebrauch vom Nutzer auf unterschiedlichen Seiten des Kopfes getragen werden, nämlich einmal im oder am linken Ohr und einmal im oder am rechten Ohr.

Ein erfindungsgemäßes Ladegerät ist ausgebildet zur Durchführung eines Verfahrens wie vorstehend beschrieben.

Nachfolgend werden Ausführungsbeispiele der Erfindung anhand einer Zeichnung näher erläutert. Darin zeigen jeweils schematisch:
- Fig. 1: ein Ladegerät, ein erstes Gerät und ein zweites Gerät,
- Fig. 2: die Geräte aus Fig. 1 und ein drittes Gerät und deren Verbindung untereinander,
- Fig. 3: ein Flussdiagramm eines Verfahrens zum Aufbau einer Kurzstreckenfunkverbindung.

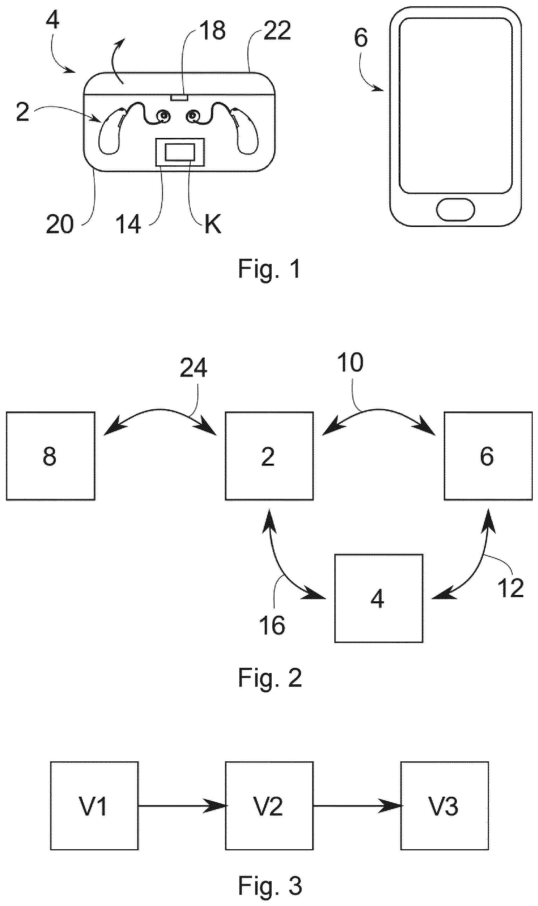

In Fig. 1 sind ein Hörgerät 2, ein Ladegerät 4, welches zum Laden dieses Hörgeräts 2 ausgebildet ist, und ein Smartphone 6 gezeigt. Das Hörgerät 2 ist ein erstes Gerät 2, das Smartphone 6 ist ein zweites Gerät 6. Das Ladegerät 4 wird auch allgemein als Gerät 4 bezeichnet. Fig. 2 zeigt die Geräte 2, 4, 6 in stark vereinfachter Form, um deren Verbindung untereinander zu verdeutlichen. Zusätzlich ist in Fig. 2 noch ein optionales, drittes Gerät 8 gezeigt, z.B. ein TV-Gerät.

Fig. 3 zeigt als ein Flussdiagramm ein Ausführungsbeispiel eines Verfahrens zum Aufbau einer Kurzstreckenfunkverbindung 10, hier einer Bluetooth-Verbindung, zwischen dem ersten Gerät 2 und einem zweiten Gerät 6, also dem Hörgerät 2 und dem Smartphone 6. Die beiden Geräte 2, 6 weisen entsprechend jeweils eine nicht explizit gezeigte Schnittstelle für die Kurzstreckenfunkverbindung 10 auf, hier eine Bluetooth-Antenne. Der Aufbau der Kurzstreckenfunkverbindung 10 wird auch als Paarung oder Kopplung (sogenanntes "pairing") bezeichnet. Die Kurzstreckenfunkverbindung 10 zeichnet sich vorliegend dadurch aus, dass diese eine beschränkte Reichweite von höchstens wenigen 10 m aufweist sowie eine Übertragungsfrequenz im Bereich weniger GHz.

Bei dem Verfahren vermittelt das Ladegerät 4 den Aufbau der Kurzstreckenfunkverbindung 10 zwischen den beiden Geräten 2, 6, indem das Ladegerät 4 Kopplungsdaten K des ersten Geräts 2 zum Aufbau der Kurzstreckenfunkverbindung 10 an das zweite Gerät 6 übermittelt, sodass dieses mit dem ersten Gerät 2 gekoppelt wird und die Kurzstreckenfunkverbindung 10 aufgebaut wird. Die Kopplungsdaten K sind beispielsweise Authentifizierungsdaten, Identifikationsdaten, Verschlüsselungsdaten, z.B. ein sogenannter Passkey, oder eine Kombination hiervon. Allgemein dienen die Kopplungsdaten K zur Kopplung der beiden Geräte 2, 6 und werden im Vorfeld der tatsächlichen Kopplung benötigt, um die Kurzstreckenfunkverbindung 10 erfolgreich aufzubauen. Die genaue Beschaffenheit der Kopplungsdaten K ist aber an sich nicht weiter von Bedeutung.

Durch die Verwendung des Ladegeräts 4 des Hörgeräts 2 zur Vermittlung des Aufbaus der Kurzstreckenfunkverbindung 10 zwischen den zwei Geräten 2, 6, müssen diese nicht mehr die nötigen Kopplungsdaten K direkt miteinander austauschen, vielmehr werden die Kopplungsdaten K von dem Ladegerät 4 bereitgestellt und je nach Bedarf an ein jeweiliges Gerät 6, 8 übermittelt, um dieses mit einem anderen Gerät 2, 6, 8 zu verbinden. Das Ladegerät 4 wird daher auch als Master-Gerät bezeichnet. Das Ladegerät 4 selbst tauscht abseits der Kopplungsdaten K vorliegend keine weiteren Daten mit den beiden Geräten 2, 6 aus, dies geschieht nach dem Aufbau der Kurzstreckenfunkverbindung 10 direkt zwischen den beiden Geräten 2, 6. Das Ladegerät 4 ist demnach gerade kein Relais der Kurzstreckenfunkverbindung 10, sondern vielmehr ein Vermittler beim Aufbau der Kurzstreckenfunkverbindung 10.

Im gezeigten Ausführungsbeispiel ist das erste Gerät 2 ein Hörgerät 2, welches mit dem Ladegerät 4 ladbar ist, sodass das Ladegerät 4 dann den Aufbau einer Kurzstreckenfunkverbindung 10 zwischen dem zugeordneten Hörgerät 2 und einem beliebigen anderen Gerät 6, 8 vermittelt. Das zweite Gerät 6 ist im gezeigten Ausführungsbeispiel ein mobiles Endgerät, hier speziell ein Smartphone 6. Alternativ ist das zweite Gerät 6 ein TV-Gerät oder ein beliebiges anderes Gerät, beispielsweise eine Audioquelle für das Hörgerät 2. Grundsätzlich sind jegliche Kombinationen von zwei Geräten 2, 6, 8 möglich. Bei einem Hörgerät 2, einem Smartphone 6 und einem dritten Gerät 8, z.B. einem TV-Gerät, vermittelt das Ladegerät 4 dann zwischen zwei beliebigen dieser Geräte 2, 6, 8, wobei jedoch die Vermittlung zwischen dem Hörgerät 2 und einem anderen Gerät 6, 8 besonders zweckmäßig ist, da ein Hörgerät 2 im Gegensatz zu einem mobilen Endgerät und einem TV-Gerät typischerweise deutlich stärkeren Beschränkungen hinsichtlich Bauraum und Energieverbrauch unterliegt und daher besonders von einer Vermittlung durch das zugehörige Ladegerät 4 profitiert.

Im Rahmen des Verfahrens werden die Kopplungsdaten K auf anderem Wege übertragen als diejenigen Daten, welche nach dem Aufbau der Kurzstreckenfunkverbindung 10 über diese übertragen werden. Im gezeigten Ausführungsbeispiel werden die Kopplungsdaten K vom Ladegerät 4 an das zweite Gerät 6 OOB (Abkürzung für "out of band"), d.h. außerhalb eines Übertragungsfrequenzbereichs der Kurzstreckenfunkverbindung 10, übermittelt. Die Kurzstreckenfunkverbindung 10 weist einen Übertragungsfrequenzbereich auf, welcher bei der Übertragung von Daten genutzt wird. Unter OOB wird nun jeglicher Frequenzbereich verstanden, welcher gerade nicht mit diesem Übertragungsfrequenzbereich überlappt oder darin liegt.

Um die Kopplungsdaten K vom Ladegerät 4 an das zweite Gerät 6 OOB zu übermitteln, wird im gezeigten Ausführungsbeispiel eine NFC-Verbindung 12 genutzt, d.h. die Kopplungsdaten K werden OOB mittels NFC (Abkürzung für "near field communication") übermittelt. NFC wird auch als Nahfeldkommunikation bezeichnet und ist grundsätzlich eine Alternative zu Bluetooth, weist jedoch regelmäßig eine niedrigere Übertragungsfrequenz auf und typischerweise auch eine geringere Reichweite. Beispielsweise liegt eine Übertragungsfrequenz der NFC-Verbindung 12 unterhalb von 1 GHz und insbesondere im Bereich von 1 MHz bis 100 MHz. Die NFC-Verbindung 12 weist beispielsweise eine Reichweite von höchstens 1 cm auf. Nachfolgend wird ohne Beschränkung der Allgemeinheit von einer NFC-Verbindung 12 ausgegangen, diese ist jedoch grundsätzlich austauschbar gegen eine andere OOB-Verbindung, d.h. OOB bezüglich der Kurzstreckenfunkverbindung 10.

Im gezeigten Ausführungsbeispiel weist das Ladegerät 4 eine NFC-Marke 14 auf, in welcher die Kopplungsdaten K des ersten Geräts 2 hinterlegt sind und diese Kopplungsdaten K werden OOB mittels NFC an das zweite Gerät 6 übermittelt, nämlich wie in Fig. 2 erkennbar über die NFC-Verbindung 12. Die Kopplungsdaten K sind beispielsweise bereits bei der Herstellung des Ladegeräts 4 auf der NFC-Marke 14 hinterlegt worden oder im Rahmen einer Anpassungssitzung für das Hörgerät 2 und entsprechend auch für das zugehörige Ladegerät 4. Alternativ oder zusätzlich werden die Kopplungsdaten K bei Bedarf von dem Ladegerät 4 bei dem ersten oder zweiten Gerät 2, 6 oder bei einem anderen Gerät 8 abgefragt und in der NFC-Marke 14 hinterlegt. So zeigt Fig. 2 beispielhaft eine optional, weitere Kurzstreckenfunkverbindung 16 zwischen dem Ladegerät 4 und dem Hörgerät 2, über welche die Kopplungsdaten K übermittelt werden. Aufgrund der Übermittlung der Kopplungsdaten K OOB bezüglich der Kurzstreckenfunkverbindung 10 kann das Ladegerät 4 selbst grundsätzlich lediglich für eine Übermittlung von Daten mittels OOB ausgebildet sein und muss nicht zwingend für eine Übermittlung mittels einer Kurzstreckenfunkverbindung 10, 16 ausgebildet sein. Beispielsweise ist das Ladegerät 4 in einer nicht explizit gezeigten Ausgestaltung lediglich zum Aufbau einer NFC-Verbindung 12 ausgebildet, nicht jedoch zum Aufbau einer Bluetooth-Verbindung. Auch ist es grundsätzlich möglich und zweckmäßig, die weitere Kurzstreckenfunkverbindung 16 in Fig. 2 durch eine NFC-Verbindung und allgemein eine OOB-Verbindung auszutauschen.

Im gezeigten Ausführungsbeispiel erkennt das Ladegerät 4 eine Annäherung des zweiten Geräts 6 an das Ladegerät 4 mittels NFC und übermittelt daraufhin, z.B. nach Aufbau der NFC-Verbindung 12 mit dem zweiten Gerät 6, die Kopplungsdaten K an das zweite Gerät 6. Die Annäherung des zweiten Geräts 6 an das Ladegerät 4 dient als zuverlässiger Indikator dafür, dass eine Kopplung des zweiten Geräts 6 mit dem ersten Gerät 2 von einem Nutzer gewünscht ist. Zur besonders sicheren Erkennung einer Annäherung ist eine NFC-Verbindung 12 besonders geeignet, da hierbei aufgrund der lediglich geringen Reichweite der nicht explizit gezeigten NFC-Antennen eine versehentliche Annäherung sehr unwahrscheinlich ist. Das Ladegerät 4 und das zweite Gerät 6 weisen dann jeweils eine NFC-Antenne auf, zur Herstellung der NFC-Verbindung 12 und zum OOB-Austausch der Kopplungsdaten K. Die beschriebene Erkennung einer Annäherung des zweiten Geräts 6 an das Ladegerät 4 dient hier zur Initiierung des Aufbaus der Kurzstreckenfunkverbindung 10, d.h. sozusagen als Schalter, um die Kopplung der beiden Geräte 2, 6 zu veranlassen und durchzuführen. Auf diese Weise wird die notwendige Nähe für die NFC-Verbindung 12 als zuverlässiger Trigger genutzt, ohne dass das erste Gerät 2 selbst mit einer NFC-Antenne ausgerüstet sein muss. Speziell bei einem Hörgerät 2 als erstem Gerät 2 ist eine NFC-Antenne nicht ohne weiteres in das Hörgerät 2 integrierbar. In das Ladegerät 4 ist jedoch eine NFC-Antenne typischerweise problemlos integrierbar.

Das erste Gerät 2 ist zum Laden an das Ladegerät 4 anschließbar. In Fig. 1 ist das Hörgerät 2 auch tatsächlich zum Laden an das Ladegerät 4 angeschlossen. Dabei wird unter "angeschlossen" verstanden, dass ein Energieaustausch zwischen dem ersten Gerät 2 und dem Ladegerät 4 zum Laden eines Energiespeichers des ersten Geräts 2 ermöglicht ist. Vorliegend erfolgt das Laden kontaktlos, z.B. induktiv mittels eines Spulenpaars, alternativ mittels Ladekontakten an dem Ladegerät 4 und dem ersten Gerät 2. In jedem Fall ist es zum Anschließen typischerweise nötig, das Ladegerät 4 und das erste Gerät 2 in eine bestimmte räumliche Beziehung zueinander zu bringen, in Fig. 1 nämlich das erste Gerät 2 in das Ladegerät 4 einzulegen.

Im gezeigten Ausführungsbeispiel übermittelt das Ladegerät 4 die Kopplungsdaten K an das zweite Gerät 6, wenn das erste Gerät 2 an das Ladegerät 4 angeschlossen ist, beispielsweise wie in Fig. 1 in das Ladegerät zum Laden eingelegt ist. Demnach erfolgt auch der Aufbau der Kurzstreckenfunkverbindung 10, während das erste Gerät 2 an das Ladegerät 4 angeschlossen ist. Eine Trennung des ersten Geräts 2 vom Ladegerät 4 zum Aufbau der Kurzstreckenfunkverbindung 10 ist nicht notwendig.

Das Ladegerät 4 übermittelt die Kopplungsdaten K an das zweite Gerät 6 vorliegend auch dann, wenn zusätzlich ein Schalter 18 des Ladegeräts 4 betätigt wird. Um die tatsächliche Kopplung der Geräte 2, 6, 8 steuerbar zu gestalten, wird also zusätzlich die Betätigung des Schalters 18 zur Initiierung der Kopplung gefordert. Auf diese Weise kann der Nutzer gezielt mittels eines einfachen Schalters 18 kontrollieren, wann eine Kopplung des ersten und des zweiten Geräts 2, 6 erfolgt. Im gezeigten Ausführungsbeispiel ist dies zusätzlich zur oben beschriebenen Nutzung einer NFC-Verbindung 12 als sozusagen virtueller Schalter möglich, d.h. ein Nutzer kann den Aufbau der Kurzstreckenfunkverbindung 10 auf zwei unterschiedliche Weisen initiieren.

Wie aus Fig. 1 erkennbar ist, weist das hier beispielhaft gezeigte Ladegerät 4 eine Schale 20 auf und das erste Gerät 2 ist durch Einlegen in die Schale 10 an das Ladegerät 4 anschließbar. Der Schalter 18 ist in einer nicht explizit gezeigten Variante in der Schale 20 angeordnet und durch Niederdrücken des ersten Geräts 2 in der Schale 20 betätigbar. In der in Fig. 1 gezeigten Ausgestaltung weist das Ladegerät 4 zusätzlich zur Schale 20 einen Deckel 22 auf, welcher zum Entnehmen des ersten Geräts 2 aus der Schale 20 aufklappbar ist, wie durch einen Pfeil angedeutet ist. Wenn das erste Gerät 2 an das Ladegerät 4 angeschlossen ist, übermittelt das Ladegerät 4 beim Aufklappen des Deckels 22 die Kopplungsdaten K an das zweite Gerät 6. Der Deckel 22 betätigt hierzu beispielsweise den Schalter 18. Auf diese Weise ist eine automatische Kopplung, d.h. ein automatischer Aufbau der Kurzstreckenfunkverbindung 10, beim Öffnen des Ladegeräts 4 kurz vor einer Entnahme des ersten Geräts 2 aus dem Ladegerät 4 realisiert.

In einer nicht explizit gezeigten Ausgestaltung erfolgt alternativ oder zusätzlich auch dann eine Kopplung, wenn das erste Gerät 2 gerade nicht an das Ladegerät 4 angeschlossen ist, sondern vielmehr von diesem getrennt ist und beispielsweise bestimmungsgemäß gebraucht wird. In einer solchen Ausgestaltung werde, wenn das erste Gerät 2 nicht an das Ladegerät 4 angeschlossen ist, die Kopplungsdaten K an das zweite Gerät 6 übermittelt, sobald das Ladegerät 4 eine Annäherung des zweiten Geräts 6 an das Ladegerät 4 erkennt. Die Erkennung der Annäherung erfolgt beispielsweise wie oben bereits beschrieben mittels NFC oder alternativ oder zusätzlich mittels eines Entfernungssensor.

In Fig. 2 ist gezeigt, wie das Ladegerät 4 optional die Kopplungsdaten K des ersten Geräts 2 von diesem über eine weitere Kurzstreckenfunkverbindung 16 erhält, hier eine weitere Bluetooth-Verbindung, zwischen dem Ladegerät 4 und dem ersten Gerät 2. Das Ladegerät 4 erkennt ein Anschließen des ersten Geräts 2 mittels einer Annäherungserkennung, z.B. im Rahmen eines sogenannten "proximity pairing" mittels RSSI (Abkürzung für "received signal strength indication"), und daraufhin wird die Kurzstreckenfunkverbindung 16 zwischen dem Ladegerät 4 und dem ersten Gerät 2 aufgebaut, zum automatischen Übermitteln der Kopplungsdaten K an das Ladegerät 4. Mit anderen Worten: das Ladegerät 4 erkennt, dass das erste Gerät 2 sich in der Nähe des Ladegeräts 4 befindet und ruft dann von diesem automatisch die Kopplungsdaten K über die weitere Kurzstreckenfunkverbindung 16, um die Kopplungsdaten K dann bei Bedarf weiter an ein zweites Gerät 6 zu übermitteln, falls zwischen dem ersten und dem zweiten Gerät 2, 6 eine Kurzstreckenfunkverbindung 10 aufgebaut werden soll.

Sobald die Kopplungsdaten K von dem Ladegerät 4 an das zweite Gerät 6 übertragen worden sind, wird das Ladegerät 4 zum Aufbau einer weiteren Verbindung 24 zwischen dem ersten Gerät 2 und einem weiteren, dritten Gerät 8 an sich nicht mehr zwingend benötigt, denn nun kann analog auch das zweite Gerät 6 vorteilhaft den Aufbau einer weiteren Kurzstreckenfunkverbindung zwischen dem ersten Gerät 2 und dem dritten Gerät 8 vermitteln. Beispielsweise übermittelt das zweite Gerät 6 zum Aufbau der hier dritten Kurzstreckenfunkverbindung 24 zwischen dem ersten Gerät 2 und einem dritten Gerät 8 die Kopplungsdaten K direkt an das dritte Gerät 8.

Bei dem in Fig. 3 beispielhaft gezeigten Verfahren wird das Hörgerät 2 im dritten Verfahrensschritt V3 durch Vermittlung des Ladegeräts 4 mit einem zweiten Gerät 6 über eine Bluetooth-Verbindung 10 gekoppelt während das Hörgerät 2 an das Ladegerät 4 angeschlossen ist. Die Kopplungsdaten K zum Aufbau der Bluetooth-Verbindung 10 werden zuvor im zweiten Verfahrensschritt V2 vom Ladegerät 4 an das zweite Gerät 6 OOB übermittelt, hier über die NFC-Verbindung 12. Dabei erfolgen die Übermittlung der Kopplungsdaten K und der Aufbau der Bluetooth-Verbindung 10 automatisch, sobald die NFC-Verbindung 12, aufgebaut ist. Die NFC-Verbindung 12 selbst wird automatisch im ersten Verfahrensschritt V1 aufgebaut, sobald das zweite Gerät 6 hinreichend nah an das Ladegerät 4 angenähert ist, d.h. vorliegend sich innerhalb einer Reichweite einer NFC-Antenne des Ladegeräts 4 für die NFC-Verbindung 12 befindet. Abseits dieser Ausgestaltung, sind aber auch andere Kombinationen der genannten Konzepte und somit andere Ausgestaltungen grundsätzlich möglich. So umfasst beispielsweise der erste Verfahrensschritt V1 alternativ oder zusätzlich das Erkennen einer Betätigung des Schalters 18, woraufhin dann im zweiten Verfahrensschritt V2 die Kopplungsdaten K übermittelt werden. Auch ist noch vor dem ersten Verfahrensschritt V1 oder wenigstens vor dem zweiten Verfahrensschritt V2 ein zusätzlicher Verfahrensschritt möglich, in welchem die Kopplungsdaten K an das Ladegerät 4 z.B. wie oben bereits beschrieben übermittelt werden.

Das in den Figuren beispielhaft gezeigte Hörgerät 2 dient zur Versorgung eines hörgeschädigten Nutzers. Hierzu weist das Hörgerät 2 ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Modifikation erfolgt anhand eines individuellen Audiogramms des Nutzers, welcher dem Hörgerät 2 zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts 2 wieder in Schall umgewandelt wird und an den Nutzer ausgegeben wird. Das gezeigte Hörgerät 2 ist zudem ein binaurales Hörgerät 2, mit zwei Einzelgeräten wie in Fig. 1 erkennbar, welche beim bestimmungsgemäßen Gebrauch vom Nutzer auf unterschiedlichen Seiten des Kopfes getragen werden, nämlich einmal im oder am linken Ohr und einmal im oder am rechten Ohr.

Alternativ ist das Hörgerät 2 lediglich zur Ausgabe von Schall aus einer Audioquelle ausgebildet und weist entsprechend einen Hörer auf, zur Schallausgabe, und einen Eingang, zum Empfang eines elektrischen Audiosignals aus der Audioquelle. In einer geeigneten Ausgestaltung ist das Hörgerät 2 ein Kopfhörer.

### Bezugszeichenliste

- 2: Hörgerät, erstes Gerät
- 4: Ladegerät
- 6: Smartphone, zweites Gerät
- 8: drittes Gerät
- 10: Kurzstreckenfunkverbindung, Bluetooth-Verbindung
- 12: NFC-Verbindung
- 14: NFC-Marke
- 16: weitere Kurzstreckenfunkverbindung
- 18: Schalter
- 20: Schale
- 22: Deckel
- 24: weitere Verbindung, dritte Kurzstreckenfunkverbindung
- K: Kopplungsdaten
- V1: erster Verfahrensschritt
- V2: zweiter Verfahrensschritt
- V3: dritter Verfahrensschritt

## Patentansprüche

1. Verfahren zum Aufbau einer Kurzstreckenfunkverbindung (10) zwischen einem ersten Gerät (2) und einem zweiten Gerät (6),
- wobei ein Ladegerät (4), welches zum Laden eines Hörgeräts (2) ausgebildet ist, den Aufbau der Kurzstreckenfunkverbindung (10) vermittelt, indem das Ladegerät (4) Kopplungsdaten (K) des ersten Geräts (2) zum Aufbau der Kurzstreckenfunkverbindung (10) an das zweite Gerät (6) übermittelt, sodass dieses mit dem ersten Gerät (2) gekoppelt wird und die Kurzstreckenfunkverbindung (10) aufgebaut wird,
**dadurch gekennzeichnet,**
- **dass** das Ladegerät (4) die Kopplungsdaten (K) an das zweite Gerät (6) übermittelt, wenn das erste Gerät (2) an das Ladegerät (4) angeschlossen ist und zusätzlich ein Schalter (18) des Ladegeräts (4) betätigt wird,
- wobei das Ladegerät (4) eine Schale (20) aufweist und wobei das erste Gerät (2) durch Einlegen in die Schale (20) an das Ladegerät (4) anschließbar ist,
- wobei der Schalter (18) in der Schale (20) angeordnet ist und durch Niederdrücken des ersten Geräts (2) in der Schale (20) betätigbar ist.

2. Verfahren zum Aufbau einer Kurzstreckenfunkverbindung (10) zwischen einem ersten Gerät (2) und einem zweiten Gerät (6),
- wobei ein Ladegerät (4), welches zum Laden eines Hörgeräts (2) ausgebildet ist, den Aufbau der Kurzstreckenfunkverbindung (10) vermittelt, indem das Ladegerät (4) Kopplungsdaten (K) des ersten Geräts (2) zum Aufbau der Kurzstreckenfunkverbindung (10) an das zweite Gerät (6) übermittelt, sodass dieses mit dem ersten Gerät (2) gekoppelt wird und die Kurzstreckenfunkverbindung (10) aufgebaut wird,
**dadurch gekennzeichnet**,
- wobei das Ladegerät (4) eine Schale (20) und einen Deckel (22) aufweist und wobei das erste Gerät (2) durch Einlegen in die Schale (20) an das Ladegerät (4) anschließbar ist,
- wobei der Deckel (22) zum Entnehmen des ersten Geräts (2) aus der Schale (20) aufklappbar ist und wobei, wenn das erste Gerät (2) an das Ladegerät (4) angeschlossen ist, beim Aufklappen des Deckels (22) das Ladegerät (4) die Kopplungsdaten (K) an das zweite Gerät (6) übermittelt.

3. Verfahren nach Anspruch 1 oder 2,
wobei das erste Gerät (2) das Hörgerät (2) ist und das zweite Gerät (6) ein mobiles Endgerät, insbesondere ein Smartphone (6).

4. Verfahren nach einem der Ansprüche 1 bis 3,
wobei die Kopplungsdaten (K) vom Ladegerät (4) an das zweite Gerät (6) OOB, d.h. außerhalb eines Übertragungsfrequenzbereichs der Kurzstreckenfunkverbindung (10), übermittelt werden.

5. Verfahren nach einem der Ansprüche 1 bis 4,
wobei das Ladegerät (4) eine NFC-Marke (14) aufweist, in welcher die Kopplungsdaten (K) des ersten Geräts (2) hinterlegt sind und wobei die Kopplungsdaten (K) OOB mittels NFC an das zweite Gerät (6) übermittelt werden.

6. Verfahren nach einem der Ansprüche 1 bis 5,
wobei das Ladegerät (4) eine Annäherung des zweiten Geräts (6) an das Ladegerät (4) erkennt, insbesondere mittels NFC, und daraufhin die Kopplungsdaten (K) an das zweite Gerät (6) übermittelt.

7. Verfahren nach einem der Ansprüche 1 bis 6,
wobei, wenn das erste Gerät (2) nicht an das Ladegerät (4) angeschlossen ist, die Kopplungsdaten (K) an das zweite Gerät (6) übermittelt werden, sobald das Ladegerät (4) eine Annäherung des zweiten Geräts (6) an das Ladegerät (4) erkennt.

8. Verfahren nach einem der Ansprüche 1 bis 7,
wobei das Ladegerät (4) die Kopplungsdaten (K) des ersten Geräts (2) von diesem über eine weitere Kurzstreckenfunkverbindung (16), insbesondere eine weitere Bluetooth-Verbindung, zwischen dem Ladegerät (4) und dem ersten Gerät (2) erhält.

9. Verfahren nach einem der Ansprüche 1 bis 8,
wobei das Ladegerät (4) ein Anschließen des ersten Geräts (2) mittels einer Annäherungserkennung erkennt und daraufhin eine Kurzstreckenfunkverbindung (10) zwischen dem Ladegerät (4) und dem ersten Gerät (2) aufgebaut wird, zum automatischen Übermitteln der Kopplungsdaten (K) an das Ladegerät (4).

10. Verfahren nach einem der Ansprüche 1 bis 9,
wobei zum Aufbau einer weiteren Kurzstreckenfunkverbindung (10) zwischen dem ersten Gerät (2) und einem dritten Gerät (8) das zweite Gerät (6) die Kopplungsdaten (K) direkt an das dritte Gerät (8) übermittelt.

11. Verfahren nach einem der Ansprüche 1 bis 10,
wobei die Kurzstreckenfunkverbindung (10) eine Bluetooth-Verbindung ist.

12. Ladegerät (4), welches ausgebildet ist zur Durchführung eines Verfahrens gemäß einem der Ansprüche 1 bis 11.

## Claims

1. Method for establishing a short-range radio link (10) between a first device (2) and a second device (6),
- wherein a charger (4) which is designed to charge a hearing device (2) mediates the establishment of the short-range radio link (10), whereby the charger (4) transmits coupling data (K) of the first device (2) for establishing the short-range radio link (10) to the second device (6), so that the second device (6) is coupled to the first device (2) and the short-range radio link (10) is established,
**characterized in that**
- the charger (4) transmits the coupling data (K) to the second device (6) when the first device (2) is connected to the charger (4) and a switch (18) of the charger (4) is additionally actuated,
- wherein the charger (4) has a tray (20), and wherein the first device (2) is connectable to the charger (4) by inserting it into the tray (20),
- wherein the switch (18) is arranged in the tray (20) and is actuatable by pressing the first device (2) down into the tray (20).

2. Method for establishing a short-range radio link (10) between a first device (2) and a second device (6),
- wherein a charger (4) which is designed to charge a hearing device (2) mediates the establishment of the short-range radio link (10), whereby the charger (4) transmits coupling data (K) of the first device (2) to the second device (6) for establishing the short-range radio link (10) so that the second device (6) is coupled to the first device (2) and the short-range radio link (10) is established,
**characterized in that**
- wherein the charger (4) has a tray (20) and a cover (22), and the first device (2) is connectable to the charger (4) by inserting it into the tray (20),
- wherein the cover (22) can be flipped open to remove the first device (2) from the tray (20) and wherein, when the first device (2) is connected to the charger (4), the charger (4) transmits the coupling data (K) to the second device (6) when the cover (22) is flipped open.

3. Method according to Claim 1 or 2,
wherein the first device (2) is the hearing device (2) and the second device (6) is a mobile terminal device, in particular a smartphone (6).

4. Method according to one of Claims 1 to 3,
wherein the coupling data (K) are transmitted from the charger (4) to the second device (6) OOB, i.e. outside a transmission frequency range of the short-range radio link (10).

5. Method according to one of Claims 1 to 4,
wherein the charger (4) has an NFC mark (14), in which the coupling data (K) of the first device (2) are stored, and wherein the coupling data (K) are transmitted OOB by means of NFC to the second device (6).

6. Method according to one of Claims 1 to 5,
wherein the charger (4) detects an approach of the second device (6) towards the charger (4) in particular by means of NFC, and then transmits the coupling data (K) to the second device (6).

7. Method according to one of Claims 1 to 6,
wherein, if the device (2) is not connected to the charger (4), the coupling data (K) are transmitted to the second device (6) as soon as the charger (4) detects an approach of the second device (6) towards the charger (4).

8. Method according to one of Claims 1 to 7,
wherein the charger (4) receives the coupling data (K) of the first device (2) from the first device (2) via a further short-range radio link (16), in particular a further Bluetooth link, between the charger (4) and the first device (2).

9. Method according to one of Claims 1 to 8,
wherein the charger (4) detects a connection of the first device (2) by means of an approach detection, and a short-range radio link (16) is then established between the charger (4) and the first device (2) for automatic transmission of the coupling data (K) to the charger (4).

10. Method according to one of Claims 1 to 9,
wherein, in order to establish a further short-range radio link (10) between the first device (2) and a third device (8), the second device (6) transmits the coupling data (K) directly to the third device (8).

11. Method according to one of Claims 1 to 10,
wherein the short-range radio link (10) is a Bluetooth link.

12. Charger (4), which is designed to carry out a method according to one of Claims 1 to 11.

## Revendications

1. Procédé permettant d'établir une liaison radio à courte distance (10) entre un premier appareil (2) et un deuxième appareil (6),
- dans lequel un chargeur (4) qui est réalisé pour recharger un appareil auditif (2) assure l'établissement de la liaison radio à courte distance (10) en ce que le chargeur (4) transmet des données de couplage (K) du premier appareil (2) pour l'établissement de la liaison radio à courte distance (10) au deuxième appareil (6) de sorte que celui-ci soit couplé au premier appareil (2) et la liaison radio à courte distance (10) soit établie, **caractérisé**
- **en ce que** le chargeur (4) transmet les données de couplage (K) au deuxième appareil (6) lorsque le premier appareil (2) est connecté au chargeur (4), et en plus un commutateur (18) du chargeur (4) est actionné,
- dans lequel le chargeur (4) présente une coque (20), et dans lequel le premier appareil (2) peut être connecté au chargeur (4) par son insertion dans la coque (20),
- dans lequel le commutateur (18) est disposé dans la coque (20) et peut être actionné par l'enfoncement du premier appareil (2) dans la coque (20).

2. Procédé permettant d'établir une liaison radio à courte distance (10) entre un premier appareil (2) et un deuxième appareil (6),
- dans lequel un chargeur (4) qui est réalisé pour recharger un appareil auditif (2) assure l'établissement de la liaison radio à courte distance (10) en ce que le chargeur (4) transmet des données de couplage (K) du premier appareil (2) pour l'établissement de la liaison radio à courte distance (10) au deuxième appareil (6) de sorte que celui-ci soit couplé au premier appareil (2) et la liaison radio à courte distance (10) soit établie, caractérisé
- dans lequel le chargeur (4) présente une coque (20) et un couvercle (22), et le premier appareil (2) peut être connecté au chargeur (4) par son insertion dans la coque (20),
- dans lequel le couvercle (22) peut être ouvert pour retirer le premier appareil (2) de la coque (20), et dans lequel, lorsque le premier appareil (2) est connecté au chargeur (4), le chargeur (4) transmet les données de couplage (K) au deuxième appareil (6) à l'ouverture du couvercle (22).

3. Procédé selon la revendication 1 ou 2,
dans lequel le premier appareil (2) est l'appareil auditif (2) et le deuxième appareil (6) est un terminal mobile, en particulier un smartphone (6).

4. Procédé selon l'une quelconque des revendications 1 à 3,
dans lequel les données de couplage (K) sont transmises du chargeur (4) au deuxième appareil (6) hors bande, c'est-à-dire à l'extérieur d'une plage de fréquences de transmission de la liaison radio à courte distance (10).

5. Procédé selon l'une quelconque des revendications 1 à 4,
dans lequel le chargeur (4) présente une marque NFC (14) dans laquelle les données de couplage (K) du premier appareil (2) sont consignées, et dans lequel les données de couplage (K) sont transmises hors bande au deuxième appareil (6) par NFC.

6. Procédé selon l'une quelconque des revendications 1 à 5,
dans lequel le chargeur (4) reconnaît que le deuxième appareil (6) s'approche du chargeur (4), en particulier par NFC, et transmet alors les données de couplage (K) au deuxième appareil (6).

7. Procédé selon l'une quelconque des revendications 1 à 6,
dans lequel, lorsque le premier appareil (2) n'est pas connecté au chargeur (4), les données de couplage (K) sont transmises au deuxième appareil (6) dès que le chargeur (4) reconnaît que le deuxième appareil (6) s'approche du chargeur (4).

8. Procédé selon l'une quelconque des revendications 1 à 7,
dans lequel le chargeur (4) reçoit les données de couplage (K) du premier appareil (2) de celui-ci par une autre liaison radio à courte distance (16), en particulier une autre liaison Bluetooth, entre le chargeur (4) et le premier appareil (2).

9. Procédé selon l'une quelconque des revendications 1 à 8,
dans lequel le chargeur (4) reconnaît une connexion du premier appareil (2) au moyen d'une reconnaissance d'approche, et ensuite, une liaison radio à courte distance (10) est établie entre le chargeur (4) et le premier appareil (2) pour la transmission automatique des données de couplage (K) au chargeur (4).

10. Procédé selon l'une quelconque des revendications 1 à 9,
dans lequel, pour l'établissement d'une autre liaison radio à courte distance (10) entre le premier appareil (2) et le troisième appareil (8), le deuxième appareil (6) transmet les données de couplage (K) directement au troisième appareil (8).

11. Procédé selon l'une quelconque des revendications 1 à 10,
dans lequel la liaison radio à courte distance (10) est une liaison Bluetooth.

12. Chargeur (4) qui est réalisé pour exécuter un procédé selon l'une quelconque des revendications 1 à 11.
